# EUROPÄISCHE PATENTSCHRIFT

(11) **EP 0 933 634 B1**
(45) Veröffentlichungstag und Bekanntmachung des Hinweises auf die Patenterteilung: **08.02.2006**
(21) Anmeldenummer: 98121169.1
(22) Anmeldetag: 12.11.1998
(51) Int. Cl.: G01N 31/16

(54) **Verwendung eines Salzes als Zusatz in Karl-Fischer Reagenzien zur Stabilisierung der Ethanol-Lösungsmittelkomponente**
Use of a salt as an additive in Karl-Fischer reagents for the stabilization of the ethanol solvent component
Utilisation d'un sel comme additif dans des réactifs Karl-Fischer pour la stabilisation du composant solvant d'éthanol

(30) Priorität: 29.01.1998 DE 19803425; 02.04.1998 DE 19814902
(43) Veröffentlichungstag der Anmeldung: 04.08.1999
(73) Patentinhaber: Sigma-Aldrich Laborchemikalien GmbH, 30926 Seelze (DE)
(72) Erfinder: Hoffmann, Helga, 31515 Wunstorf (DE)
(74) Vertreter: Geissler, Bernhard

(56) Entgegenhaltungen:
- EP-A- 0 135 098
- EP-A- 0 484 622
- DE-A- 3 904 992
- DE-A- 3 923 883
- US-A- 2 967 155
- US-A- 4 550 083
- US-A- 4 619 900
- US-A- 5 102 804
- US-A- 5 139 955

## Beschreibung

Die vorliegende Erfindung betrifft die Verwendung eines Salzes als Zusatz in Karl Fischer (KF) Reagenzien gemäß Anspruch 1.

Bei der Karl-Fischer-Titration wird das Wasser durch eine Redoxtitration nach folgender Reaktionsgleichung bestimmt:

H₂O + I₂ + (RNH)SO₃-R' + 2 RN = > (RNH)SO₄ + 2 (RNH) I

RN = Base, R' = Alkyl (ggf. substituiert)

Im Reagenz entsteht aus einem Alkohol und Schwefeldioxid ein Alkylester der schwefligen Säure. Dieser wird unter Verbrauch stöchiometrischer Mengen Wasser durch Iod zu dem korrespondierenden Schwefelsäurealkylester oxidiert. In der Praxis werden als Alkoholkomponenten hauptsächlich Methanol oder 2-Methoxyethanol (Methylglykol) verwendet (E. Scholz, "Karl-Fischer-Titration", Springer Verlag, 1984).

Es gibt vier Grundformen der Karl-Fischer-Titration, d. h. die volumetrische Titration mit einem Einkomponentenreagenz, die volumetrische Titration mit einem Zweikomponentenreagenz und die coulometrische Titration mit und ohne Diaphragma. Diese vier Varianten erfordern unterschiedliche Reagenzien.

Für die Einkomponententitration wird ein Reagenz benötigt, das alle Reaktionspartner des Wassers in einer Lösung enthält. Schwefeldioxid, Iod und die Base werden in einem Alkohol gelöst. In dieser Lösung reagieren das Schwefeldioxid und der Alkohol schon bei der Zubereitung zu Alkylsulfit. Die Base nimmt das freiwerdende Proton auf. In dem Originalreagenz von Karl Fischer wurde Methanol als Alkohol verwendet. Stabilere Reagenzien wurden später mit Methylglykol erhalten. In allen Einkomponentenreagenzien fällt der Titer, d.h. die Konzentration des aktiven Iods, mit der Zeit ab. Als Arbeitsmedium für die Probe wird im Titriergefäß meist Methanol oder ein Gemisch von Methanol und anderen Lösungsmitteln verwendet.

Bei der Zweikomponententitration werden, wie der Name schon sagt, zwei Reagenzien benötigt. Als Titriermittel wird eine Lösung von Iod in Methanol verwendet, als Solvent dient eine Lösung von Schwefeldioxid und einer Base in Methanol. In diesem Solvent wird ebenfalls wie im Einkomponentenreagenz Alkylsulfit gebildet. In diesem Fall entsteht Methylsulfit, weil immer Methanol als Lösungsmittel verwendet wird. Die Solvent-Komponente wird im Titriergefäß vorgelegt, mit der Titrantkomponente wird titriert. Ein Titerabfall findet in der Titrantkomponente nicht statt.

Die Reagenzien für die coulometrische Wasserbestimmung nach Karl Fischer unterscheiden sich in ihren Bestandteilen von den volumetrischen Reagenzien. Statt Iod wird ein lösliches Iodid eingesetzt. Aus diesem Iodid wird während der Titration durch anodische Oxidation Iod erzeugt, das analog der beschriebenen Reaktionsgleichung reagiert. Die anderen Bestandteile des Reagenzes sind dieselben wie in den volumetrischen Reagenzien, d.h. Schwefeldioxid, eine Base und ein Alkohol, die sich wieder wie beschrieben zu dem Alkylsulfit umsetzen, das mit dem Iod und dem Wasser reagiert. Bei der Coulometrie wird ebenfalls bevorzugt Methanol, teilweise in Gemischen mit anderen Lösungsmitteln wie Chloroform, verwendet. In einer sogenannten Zelle mit Diaphragma sind der Kathoden- und der Anodenraum durch ein Diaphragma getrennt. Dadurch werden Störungen durch an der Kathode entstehende oxidierbare Substanzen vermieden. Beide Räume müssen separat mit Reagenz befüllt werden. Für den Kathodenraum wird üblicherweise ein spezielles Kathodenreagenz eingesetzt.

Bei der coulometrischen Titration ohne Diaphragma ist eine Trennung von Kathoden- und Anodenraum nicht nötig, da eine spezielle Kathodengeometrie die Bildung von oxidierbaren Substanzen verhindert. Hier ist nur ein Gefäß zu befüllen.

Das verwendete Lösungsmittel hat mehrere Funktionen, so daß die Zahl der geeigneten Lösungsmittel eingeschränkt ist. Das Lösungsmittel ist eine reaktive Komponente, d.h. es muß mit dem Schwefeldioxid einen Ester bilden können. Deshalb kommen nur Alkohole oder Gemische eines Alkohols mit anderen Lösungsmitteln in Frage. Das Lösungsmittel muß die anderen Komponenten des Karl-Fischer-Reagenzes sowie die bei der Reaktion entstehenden Verbindungen lösen. Es muß geeignet sein, die zu untersuchenden Proben zu lösen. Die mit dem Lösungsmittel hergestellten Karl-Fischer-Reagenzien müssen hinreichend stabil sein, d.h. das Lösungsmittel darf. keine störenden Nebenreaktionen verursachen. Bei der coulometrischen Titration muß es mit den enthaltenen Salzen ein hinreichendes Leitvermögen ergeben. Außerdem muß es die bei der Karl-Fischer-Titration übliche dead-stop Indikation ermöglichen.

Methanol ist das bevorzugte und bislang in der Praxis nahezu als einziges - eingesetzte alkoholische Arbeitsmedium bei den Karl-Fischer Reagenzien, bzw. bei der Karl-Fischer-Titration. Es wurde bereits 1935 von Karl Fischer in der Original-Rezeptur für das Karl-Fischer Reagenz empfohlen und wird auch bevorzugt als Lösungsmittel für die zu untersuchenden Proben verwendet.

Methanol hat viele Vorteile, insbesondere dahingehend, daß es die oben skizzierten Erfordernisse für die Verwendung als Lösungsmittel oder Arbeitsmedium in einem Karl-Fischer-Reagenz fast uneingeschränkt erfüllt.

Methanol hat jedoch Nachteile dahingehend, daß die Stabilität der Einkomponenten-Karl-Fischer-Reagenzien mit Methanol als alkoholische Komponente relativ gering ist. Ein weiterer Nachteil liegt in dem unbefriedigenden Lösungsvermögen von Methanol für langkettige organische Verbindungen und Fette. Ein weiterer, in den letzten Jahren immer deutlicher hervortretender Nachteil von Methanol liegt in seiner Toxizität.

Andere Lösungsmittel werden demgegenüber nur in beschränktem Umfang eingesetzt. Peters und Jungnickel (Annalen der Chemie, Bd. 27, S. 450-453) haben Methylglykol als Lösungsmittel eingeführt. Heute werden auch analoge Glykolether verwendet. Die damit hergestellten Einkomponenten-Karl-Fischer-Reagenzien zeigen eine gute Titerstabilität. Als Arbeitsmedium für die zu untersuchenden Proben sind Glykolether jedoch nicht geeignet, da die KF-Reaktion zu langsam abläuft und Indikationsprobleme auftreten. Ferner ist auch Methylglykol toxikologisch nicht unbedenklich. Bevorzugtes Lösungsmittel für die Probe ist auch hier Methanol.

Um das Lösungsvermögen für die zu untersuchende Probe zu verbessern, werden dem Methanol häufig andere Lösungsmittel (Scholz, a.a.O., S. 58-61), wie z.B. Chloroform, Propanol, Butanol oder Xylol zugesetzt. Die Verwendung von halogensubstituierten Alkoholen bei der Wasserbestimmung nach KF in Ketonen zum Lösen der Probe beschreibt die EP-B 0 135 098.

Wie sich aus der obigen Zusammenfassung des Standes der Technik ergibt, sind die bislang verwendeten Alkohole in der Laborpraxis nicht unbedenklich. Methanol ist giftig und entflammbar, Methylglykol ist teratogen und fötotoxisch.

Methylglykol wird für Einkomponentenreagenzien verwendet, als Arbeitsmedium in der Titrierzelle greift man hier auch hauptsächlich auf Methanol zurück, da die üblichen Karl-Fischer-Titratoren in Methylglykol als Arbeitsmedium zu langsam titrieren. Auch andere Lösungsmittel, die eine Titration ermöglichen, sind gesundheitlich bedenklich. Tetrahydrofiufurylalkohol ist als gesundheitsschädlich eingestuft, N-Methylformamid ist fötotoxisch.

Ein weiterer Nachteil der oben beschriebenen Alkohole in der Karl-Fischer-Titration ist das Auftreten von Nebenreaktionen bei bestimmten Proben, die sich in einer Verfälschung der Titrationsergebnisse niederschlagen. Methanol reagiert mit Ketonen und Aldehyden zu Ketalen bzw. Acetalen. Bei dieser Reaktion wird Wasser gebildet. Zusätzlich gehen Aldehyde in der Gegenwart von Methanol und Methylglykol eine Bisulfitaddition mit dem Schwefeldioxid ein. Dabei wird Wasser verbraucht, was ebenfalls die Analyse verfälscht. Vermeiden kann man diese Nebenreaktion durch den Einsatz von 2-Chlorethanol als Lösungsmittel im Titriergefäß. Diese Substanz ist jedoch hochgiftig und wie viele halogenierte Verbindungen schwer abbaubar.

Um eine wesentliche Verbesserung der zur Zeit üblichen Karl-Fischer-Reagenzien zu erzielen, gilt es also, eine Formulierung mit einem geeignetem Alkohol zu finden, der in seinem Lösevermögen für polare Substanzen, der Leitwertbildung für coulometrische Reagenzien und der Reaktionsgeschwindigkeit den oben beschriebenen möglichst ähnlich ist, während Nebenreaktionen weitestgehend unterdrückt werden sollen. Das wichtigste Kriterium ist jedoch das Gefährdungspotential, das von dem Reagenz für die Anwender und die Umwelt ausgeht. Giftige Reagenzien sollten aus Routinelaboratorien im Interesse der Sicherheit verbannt werden. Schwer abbaubare Reagenzien belasten die Umwelt auf Jahre hinaus.

Demgemäß bestand bei den beteiligten Kreisen seit längerer Zeit ein starkes Bedürfnis, die o.g. Lösungsmittel, insbesondere Methanol, durch ein ebenso geeignetes, jedoch ein eindeutig niedrigeres Gefährdungspotential aufweisendes Lösungsmittel zu ersetzen.

Die Verwendung von Ethanol anstelle von Methanol würde jedenfalls dieses Kriterium erfüllen. In der Praxis wurde Ethanol bislang noch nie verwendet. Es wird jedoch als theoretisch mögliches Lösungsmittel in einigen früheren Anmeldungen bzw. Patenten, wie z.B. der DE-C 39 23 883, der DE-C 39 04 992 und der EP-B 0 135 098 als eine Möglichkeit unter einer Vielzahl von anderen möglichen Kandidaten für Lösungsmittel genannt. Der Grund dafür, daß Ethanol bislang in der Praxis noch nie eingesetzt wurde, ist in folgenden Nachteilen bei der Verwendung von reinem Ethanol zu sehen:
1. Die Endpunktseinstellung bei der üblichen Vortitration (Entwässerung des Arbeitsmediums) ist schleppend und ungenau. Dadurch wird das Resultat der folgenden Wasserbestimmung nach Karl-Fischer verfälscht.
2. Die Endpunktsindikation mit den üblichen Indikationsmethoden, wie z.B. Bipotentiometrie oder Biamperometrie (auch als dead-stop-Indikation bezeichnet) ist gestört. Dies führt leicht zu Übertitration.
3. Iodhaltige Titriermittel auf Ethanol-Basis sind nicht titerstabil. Eine Iodlösung in Ethanol, die z.B. als Titrant-Komponente in einem Zweikomponentenreagenz verwendet wird, zeigt einen langsamen aber permanenten Titerabfall.

Der vorliegenden Erfindung lag demgemäß die Aufgabe zugrunde, ein ver-bessertes, insbesondere toxikologisch unbedenklicheres Karl-Fischer-Reagenz zur Verfügung zu stellen.

Bei den in diesem Zusammenhang durchgeführten Arbeiten, wurde trotz der oben beschriebenen, in Fachkreisen bekannten Nachteile von Ethanol einige Untersuchungen mit Ethanol als Lösungsmittel durchgeführt.

Diese Untersuchungen zeigten, daß die oben beschriebenen Nachteile sich überraschenderweise dadurch beheben lassen, daß einem Karl-Fischer-Reagenz, das Ethanol als alkoholische Komponente enthält, ein geeigneter d.h. stabilisierender oder aktivierender oder aktivierender und stabilisierender Zusatz zugegeben wird. Durch die Zugabe derartiger Zusätze war es möglich, die Titrationsgeschwindigkeit bei der üblichen Vortitration zu beschleunigen und die Endpunktsindikation mit bipotentiometrischen oder biamperometrischen Methoden sicherzustellen. Titriermittel werden durch die erfindungsgemäß verwendeten Zusätze stabilisiert, so daß der Titer deutlich langsamer abfällt.

Demgemäß betrifft die vorliegende Erfindung die Verwendung eines Salzes als Zusatz in Karl-Fischer-Reagenzen zur Wasserbestimmung gemäß Anspruch 1.

Bevorzugt werden dabei Salze einer Halogenwasserstoffsäure, Salze der Schwefelsäure, Salze der schwefeligen Säure, Salze der Ethylschwefelsäure, Salze der ethylschwefligen Säure, Salze einer Carbonsäure oder eine Kombination aus zwei oder mehr davon eingesetzt.

Im einzelnen sind dabei zu nennen:

Beispiele für besonders geeignete Säuren sind Iodwasserstoffsäure, Chlorwasserstoffsäure, Bromwasserstoffsäure, schweflige Säure und Schwefelsäure, sowie deren Umsetzungsprodukte mit Ethanol, wie z.B. ethylschwefelige Säure oder Ethylschwefelsäure, Sulfonsäuren, Phosphorsäure, Propionsäure, 2-Ethylhexansäure, Bezoesäure und Salicylsäure.

Die o.g. Salze werden bei der Herstellung des Reagenzes direkt zugesetzt. So können z.B. Iod und Schwefeldioxid mit Wasser reagieren, wobei Iodwasserstoffsäure und Schwefelsäure bzw. Ethylschwefelsäure entstehen, die mit den vorhandenen Basen zu den entsprechenden Salzen weiter reagieren können. Das dafür erforderliche Wasser kann in den verwendeten Rohstoffen vorhanden sein oder zu einem späteren Zeitpunkt zugesetzt werden.

Die Konzentration der stabilisierenden oder aktivierenden oder stabilisierenden und aktivierenden Verbindungen kann je nach Anwendung zwischen 0,01 mol/l und 4 mol/l liegen. Dabei spielt das verwendete Titriergerät, das Indikationssystem und der gewünschte Anwendungszweck eine Rolle. Die erfmdungsgemäß verwendeten Salze können einzeln oder auch in Kombination miteinander verwendet werden.

Die vorliegende Erfindung betrifft auch die Verwendung eines Salzes einer anorganischen oder organischen Säure mit einer anorganischen oder organischen Base oder eine Kombination aus zwei oder mehr davon als Ethanol bzgl. seiner Anwendbarkeit in der Wasserbestimmung nach KF stabilisierende oder aktivierende oder aktivierende und stabilisierende Verbindung.

Besonders bevorzugt wird dazu ein Salz einer Halogenwasserstoffsäuse, Schwefelsäure, schwefliger Säure, Ethylschwefelsäure, ethylschwefeliger Säure, einer Carbonsäure mit einem organischen Amin, einer quaternären Ammoniumverbindung, eines anorganischen Kations, und einer Kombination aus zwei oder mehr davon verwendet.

Dabei können die verwendeten Salze zur Stabilisierung oder Aktivierung oder Stabilisierung und Aktivierung von Ethanol in einer Solvent- oder Titrant-Komponente für die Zweikomponenten-Karl-Fischer-Titration, einem Anolyten oder einem Katholyten für die coulometrische Wasserbestimmmung nach KF verwendet werden.

Die erfindungsgemäßen Karl-Fischer-Reagenzien haben gegenüber konventionellen Reagenzien auf der Basis von Methanol einige Vorteile. Ethanol ist nach der Gefahrstoffverordnung niedriger, d.h. lediglich als entflammbar, nicht jedoch als toxisch eingestuft und kann in großem Umfang das bislang verwendete Methanol ersetzen, sofern es die erfindungsgemäß stabilisierende oder aktivierende oder stabilisierende und aktivierende Verbindungen enthält.

Ferner hat Ethanol gegenüber Methanol nicht nur toxikologische Vorteile, sondern zeichnet sich auch durch ein besseres Lösungsvermögen für langkettige Kohlenwasserstoffe aus, so daß derartige Substanzen mit den erfindungsgemäßen Karl-Fischer-Reagenzien leichter titriert werden können als in methanolischen Reagenzien.

Im folgenden sollen nunmehr noch einige weitere einzelne Aspekte der vorliegenden Erfindung, jeweils unter Bezugnahme auf die sich daran anschließenden Beispiele, detailliert beschrieben werden.

Der Zusatz von z.B. Imidazolhydroiodid verbessert dabei die Stabilität der Titrant-Komponente, die einen deutlich niedrigeren Titerabfall aufweist als bei Verwendung von reinem Ethanol. Eine derartige Titrant-Komponente ist in Beispiel 2 gezeigt.

Für die Wasserbestimmung nach KF werden die erfindungsgemäßen KF-Reagenzien in üblicher Weise verwendet. In der Titrierzelle wird ein geeignetes Arbeitsmedium oder eine Solvent-Komponente, d.h. ein Arbeitsmedium oder Solvent-Komponente auf Ethanol-Basis. Die Vorlage wird trockentitriert. Dann wird eine Probe, deren Wassergehalt zu bestimmen ist, eingewogen und in üblicher Weise titriert.

Der Anolyt für die coulometrische Wasserbestimmung nach KF besteht aus Ethanol, einer Base, Schwefeldioxid und dem Zusatz gemäß Anspruch 1. Der Katholyt für die coulometrische Wasserbestimmung nach KF, besteht aus Ethanol und dem Zusatz gemäß Anspruch 1.

Eine Formulierung für einen Anolyten ist in Beispiel 3 gezeigt. Eine Formulierung für einen Katholyten zeigt Beispiel 4. Beim Anolyten wird wiederum Imidazolhydroiodid als Ethanol stabilisierende oder aktivierende oder stabilisierende und aktivierende Verbindung zugesetzt, während für den Katholyten beispielsgemäß Diethanolaminhydrochlorid als derartige Verbindung zugesetzt wird.

Auch Kombinationen der Reagenzien mit herkömmlichen KF-Reagenzien und allen üblichen Lösungsmitteln wie z.B. anderen Alkoholen, Glycolen, halogenierten Kohlenwasserstoffen und aromatischen Kohlenwasserstoffen sind möglich. Deren Gehalt an der Alkoholkomponente liegt jedoch stets im toxikologisch unbedenklichen Bereich. Dabei sind auch Kombinationen mit Methanol möglich, wobei jedoch der Gehalt an Methanol in der Alkoholkomponente nicht mehr als 19 Gew.-%, vorzugsweise nicht mehr als 15 Gew.-% betragen soll.

Die Erfindung soll nunmehr noch anhand einiger erfindungsgemäßer Beispiele und entsprechender Anwendungsbeispiele erläutert werden.

### Beispiele

### Beispiel 1 (Solvent-Komponente für die Zweikomponenten-Karl-Fischer-Titratiön)

52 g Diethanolamin (0,5 mol) wurden in 1 l Ethanol gelöst. Dann wurden 32 g Schwefeldioxid (0,5 mol) eingeleitet.

### Beispiel 2 (Titrant-Komponente für die Zweikomponenten-Karl-Fischer-Titration)

75 g Iod und 137 g Imidazolhydroiodid wurden in 1 l Ethanol gelöst.

Die beiden Formulierungen nach Beispiel 2 und 3 wurden gemeinsam zur Wasserbestimmung verwendet, wie es das Anwendungsbeispiel 2 beschreibt.

### Beispiel 3 (Anolyt für die coulometrische Wasserbestimmung nach KF).

68 g Imidazol (1 mol) wurden in 1 l Ethanol gelöst. Dann wurden 32 g Schwefeldioxid eingeleitet. Abschließend wurden 40 g Imidazolhydrojodid zugesetzt und gelöst. Diese Lösung diente als Anolyt bei der coulometrischen Karl-Fischer-Titration.

### Beispiel 4 (Katholyt für die coulometrische Wasserbestimmung nach KF)

210 g Diethanolaminhydrochlorid wurden in 1 l Ethanol gelöst. Diese Lösung diente als Katholyt für die coulometrische Karl-Fischer-Titration.

### Anwendungsbeispiel 1

In einer volumetrischen Titrierzelle wurden 30 ml Solvent nach Beispiel 1 vorgelegt und mit dem Titranten nach Beispiel 2 trockentitriert. Dann wurde die zu untersuchende Probe zugesetzt. Der Wassergehalt wurde mit dem gleichen Titranten austitriert.

### Anwendungsbeispiel 2

In einer Titrierzelle eines volumetrischen Karl-Fischer-Titrators wurden 50 ml einer Solvent-Komponente nach Beispiel 1 vorgelegt und mit dem handelsüblichen Hydranal-Titrant der RDH Laborchemikalien GmbH & Co KG vollständig trockentitriert. Dann wurde die zu untersuchende Probe eingebracht. Anschließend wurde der Wassergehalt mit dem Hydranal-Titrant titriert.

### Anwendungsbeispiel 3

In einer coulometrischen Titrierzelle eines handelsüblichen Karl-Fischer-Coulometers Kyoto MKC-210, die zwei getrennte Kammern enthielt, wurde das Reagenz nach Beispiel 3 in den Anodenraum und das Reagenz nach Beispiel 4 in den Kathodenraum eingefüllt.

Anschließend wurde eine Wasserbestimmung durchgeführt.

### Anwendungsbeispiel 4

In einer coulometrischen Titrierzelle eines handelsüblichen Karl-Fischer-Coulometers Metrohm 684, die nur eine Kammer enthielt, wurde das Reagenz nach Beispiel 3 eingefüllt.

Anschließend wurde eine Wasserbestimmung durchgeführt.

## Patentansprüche

1. Verwendung eines Salzes einer Base ausgewählt wird aus der Gruppe bestehend aus Pyridin, Morpholin, Imidazol, Diethanolamin oder einer Kombination aus zwei oder mehr davon als Zusatz zur Stabilisierung oder Aktivierung oder Stabilisierung und Aktivierung von Ethanol als Alkoholkomponente in Karl-Fischer-Reagenzien, wobei das Reagenz eine Solvent- oder Titrantkomponente auf Ethanol-Basis für die Zweikomponenten-Karl-Fischer-Titration, oder ein Anolyt oder Katolyt für die coulometrische Wasserbestimmung nach Karl Fischer ist.

2. Verwendung nach Anspruch 1, wobei das Salz eines einer Halogenwasserstoffsäure, Schwefelsäure, schwefliger Säure, Ethylschwefelsäure, ethylschwefliger Säure, einer Carbonsäure und einer Kombination aus zwei oder mehr davon ist.

## Claims

1. Use of a salt of a base selected from the group consisting of pyridine, morpholine, imidazole, diethanolamine or a combination of two or more thereof as additive for stabilizing or activating or stabilizing and activating of ethanol as alcoholic component in a Karl-Fischer-Reagent, wherein the reagent is a solvent or titrant component on ethanol-basis for the two-component Karl-Fischer-titration or an anolyte or catolyte for the coulometric Karl-Fischer water determination.

2. Use according to claim 1, wherein the salt is one of hydrohalic acid, sulfuric acid, sulphurous acid, ethylhydrogen sulfate, ethylhydrogen sulphite, a carboxylic acid or a combination of two or more thereof.

## Revendications

1. Utilisation d'un sel d'un acide inorganique ou organique avec une base inorganique ou organique choisie dans le groupe consistant en la pyridine, la morpholine, l'imidazole, la diéthanolamine, ou une combinaison d'au moins deux d'entre elles, en tant qu'additif pour stabiliser ou activer ou stabiliser et activer l'éthanol en tant que composant alcool dans des réactifs de Karl-Fischer, le réactif étant un composant solvant ou solution titrée à base d'éthanol pour le titrage de Karl-Fischer à deux composants, ou un anolyte ou un catholyte pour le dosage coulométrique de l'eau selon Karl-Fischer.

2. Utilisation selon la revendication 1, pour laquelle le sel est un sel d'un acide halogènhydrique, de l'acide sulfurique, de l'acide sulfureux, de l'acide éthylsulfurique, de l'acide éthylsulfureux, d'un acide carboxylique ou d'une combinaison d'au moins deux d'entre eux.
